# EUROPÄISCHE PATENTANMELDUNG

(11) **EP 0 890 759 A1**
(43) Veröffentlichungstag der Anmeldung: **13.01.1999**
(21) Anmeldenummer: 97111896.3
(22) Anmeldetag: 12.07.1997
(51) Int. Cl.: F16G 13/16

(54) **Klemmvorrichtung für eine Zugentlastung dynamisch beanspruchter Leitungen**

(71) Anmelder: ekd gelenkrohr GmbH, 40699 Erkrath (DE)
(72) Erfinder: Klein, Holger, 40625 Düsseldorf (DE)
(74) Vertreter: Albrecht, Rainer Harald, Dr.-Ing.

(57) **Zusammenfassung**

Die Erfindung betrifft eine Klemmvorrichtung für eine Zugentlastung dynamisch beanspruchter Leitungen, insbesondere für Leitungen in einer Energieführungskette. Sie besteht aus zumindest einem Flachstab (5), der in Längsrichtung gereihte Rastausnehmungen (7) aufweist, und an dem Flachstab (5) befestigbaren Klemmelementen (2). Die Klemmelemente (2) weisen ringförmig geschlossene Anschlußenden (8) auf, die auf den Flachstab (5) aufschiebbar sind und eine in Aufschubrichtung federnd in die Rastausnehmungen (7) des Flachstabs (5) eingreifende sowie die Rückstellbewegung blockierende Rastnase (9) aufweisen. Die Leitungen (4) sind zwischen Sitzflächen der Klemmelemente zugfest einspannbar.

## Beschreibung

Die Erfindung betrifft eine Klemmvorrichtung für eine Zugentlastung dynamisch beanspruchter Leitungen, insbesondere für Leitungen in einer Energieführungskette, mit einem Träger und mindestens einem an dem Träger gehaltenen Klemmelement, wobei die Leitungen an einer Sitzfläche des Klemmelementes zugfest einspannbar sind. Bei den Leitungen kann es sich um druckfeste Schläuche, z.B. Hydraulikschläuche und Druckluftschläuche, mehradrige Elektrokabel, Schutzschläuche für Elektrokabel u. dgl., handeln, die innerhalb einer Energieführungskette an einem unbewegten Abschnitt oder außerhalb der Energieführungskette mit Abstand zu deren Ende befestigt sind. Die Klemmvorrichtung muß einen festen Sitz der eingespannten Leitung gewährleisten und diese gegen Zug sichern. Im Regelfall enthält eine Energieführungskette eine Mehrzahl von Leitungen, die nebeneinander und zum Teil auch mehrlagig, vorzugsweise durch Trennstege der Energieführungskette getrennt, angeordnet sind. Eine sichere Befestigung dieser nebeneinander und teilweise mehrlagig angeordneten Leitungen in Endgliedern der Kette oder mit Abstand außerhalb dieser Endglieder ist wichtig für einen reibungslosen Betrieb der Energieführungskette.

Eine Klemmvorrichtung des eingangs beschriebenen Aufbaus und mit der eingangs beschriebenen Zweckbestimmung ist aus WO 95/28 582 (vgl. insbesondere Fig. 4) bekannt. Der Träger ist bügelförmig ausgebildet und mit seinen beiden Schenkelenden formschlüssig in eine Befestigungsnut einer Querstrebe eingesetzt. Die Leitungseinspannung erfolgt zwischen einem feststehenden sowie einem beweglichen Klemmelement, wobei die Verstellung des beweglichen Klemmelementes durch eine am Bügel angeordnete Klemmschraube erfolgt. Aus DE-A 195 02 681 ist eine Klemmvorrichtung bekannt, die aus paarweise miteinander verschraubbaren Klemmbacken aufgebaut ist. Die Klemmbacken sind auf eine U-förmige Schiene aufsteckbar. Die bekannten Klemmvorrichtungen sind konstruktiv aufwendig. Auch in handhabungstechnischer Hinsicht sind sie verbesserungsbedürftig.

Zum Stand der Technik gehören ferner Abstandsschellen zur Verlegung von elektrischen Kabeln und Schläuchen, die aus einem Unterteil und einem bügelförmigen Oberteil bestehen. Das Oberteil ist auf das Unterteil aufsteckbar und durch eine Rastverbindung an diesem gehalten (z.B. DE-PS 632 510, GB-A 2 101 666). Abstandsschellen mit einem solchen Aufbau werden bei der Verlegung elektrischer Kabel und Schläuche auf Wandflächen eingesetzt. Die Leitungen sind keinen dynamischen Kräften ausgesetzt. Schellen für Rohre, Schläuche und dergleichen, die jeweils aus einem bügelförmigen Oberteil und einem bügelförmigen Unterteil bestehen, können auch nebeneinander sowie übereinander angeordnet werden. Bei einer aus DE-U 85 04 051 bekannten Anordnung sind an den Außenflächen der Ober- und Unterteile Anschlußenden für eine formschlüssige Verbindung neben- oder übereinander angeordneter Schellen vorgesehen.

Aus FR-A 801 953 ist eine Klemmvorrichtung bekannt, die aus einer an einer Wandfläche befestigbaren Schiene und als Kragarme ausgebildeten Haltern besteht. Die Halter weisen an ihrem rückwärtigen Ende Anschlußzapfen auf, die nach Art eines Bajonettverschlusses in die Schiene einsetzbar sind. Die Halter sind in der Schiene beweglich geführt, wobei elektrische Kabel und dergleichen jeweils zwischen benachbarten Haltern eingespannt sind. Die Fixierung der Halter erfolgt durch separate Klemmelemente, die unterhalb und oberhalb einer aus mehreren Haltern bestehenden Gruppe in die Schiene eingesetzt und mittels Klemmschrauben in der Schiene festgesetzt werden. Die bekannte Klemmvorrichtung erlaubt die Halterung mehrerer, nebeneinander an einer Wandfläche angeordneter Leitungen. Sie gewährleisten jedoch keinen ausreichend festen Sitz von Leitungen, die dynamischen Kräften ausgesetzt sind.

Schließlich sind Kabelbindersysteme bekannt. Hierbei werden Leitungen mittels flexibler Bänder einzeln oder zu mehreren Leitungen gebündelt auf einem Träger befestigt. Kabelbindersysteme sind zwar einfach in der Anwendung, gewährleisten aber ebenfalls Keinen sehr festen Sitz der Leitungen.

Der Erfindung liegt die Aufgabe zugrunde, eine Klemmvorrichtung für eine Zugentlastung dynamisch beanspruchter Leitungen anzugeben, die aus wenigen Standardteilen besteht, leicht in der Handhabung ist und sowohl ein- als auch mehrlagig angeordnete Leitungen gegen Zug und Drehung sichert.

Die Aufgabe wird bei einer Klemmvorrichtung des eingangs beschriebenen Aufbaus erfindungsgemäß dadurch gelöst, daß der Träger aus zumindest einem Flachstab besteht, der in Längsrichtung gereihte Rastausnehmungen aufweist, und daß das Klemmelement ein ringförmiges Anschlußende aufweist, das auf den Flachstab aufschiebbar ist und eine in Aufschubrichtung federnd in die Rastausnehmungen des Flachstabs eingreifende sowie die Rückstellbewegung blockierende Rastnase aufweist. Die Länge des Flachstabs ist so groß bemessen, daß eine Mehrzahl von Klemmelementen aufgeschoben werden können. Durch die Rastverbindung ist die Montage der Klemmelemente leicht und ohne Werkzeug ausführbar. Die Leitungen sind einzeln zwischen jeweils zwei paarweise angeordneten Klemmelementen einspannbar. Die Leitungen können ferner zwischen einer Bodenfläche, an der der Flachstab befestigt ist, und einem an dem Flachstab gehaltenen Klemmelement eingespannt werden. Die Position der Klemmelemente an dem Flachstab ist beliebig festlegbar und richtet sich nach dem konkreten Anwendungsfall. Der Flachstab ist als Vertikalstab am Quersteg einer Energieführungskette befestigbar oder kann außerhalb einer Energieführungskette mit Abstand zum Anschlußende der Energieführungskette auf einer geeigneten Bodenfläche, einem Träger od. dgl. befestigt werden. Zu diesem Zweck ist der Fuß des Flachstabes als Steckfuß, Klemmfuß, Schraubfuß od. dgl. ausführbar. Es versteht sich, daß eine Mehrzahl von Flachstäben in vertikaler, paralleler Ausrichtung nebeneinander auf einem Träger bzw. dem Quersteg einer Energieführungskette angeordnet werden können.

Flachstäbe des beschriebenen Aufbaus sind als kammerbildende Trennstege in Energieführungsketten bekannt (DE-U 91 09 241). Im Rahmen der bekannten Maßnahmen sind an die Flachstäbe horizontale Lagenstege angeschlossen, die den Innenraum einer Energieführungskette unterteilen. Sie dienen der Ordnung und Führung der Leitungen innerhalb der Energieführungskette und lassen Bewegungen der Leitungen zu. Die Lagenstege weisen geschlitzte und dadurch elastisch verformbare Anschlußenden auf. Für eine Zugentlastung ist die bekannte Anordnung ungeeignet.

Die Erfindung beruht auf der Erkenntnis, daß die für eine andere Zweckbestimmung bekannten Flachstäbe vorteilhaft als Träger für eine Klemmvorrichtung eingesetzt werden können, in der dynamisch beanspruchte Leitungen zugfest gehalten sind. Es sind überraschend große Klemmkräfte erreichbar, wenn die Anschlußenden als geschlossene Ringkörper ausgebildet sind.

Für die weitere Ausgestaltung der erfindungsgemäßen Klemmvorrichtung bestehen verschiedene Möglichkeiten. Gemäß einer ersten Ausführungsform sind die Klemmelemente als Kragarme ausgebildet, die einen Formkörper mit Sitzfläche für die einzuspannende Leitung sowie lediglich ein einziges Anschlußende an ihrem rückwärtigen Ende aufweisen, wobei zwischen dem Anschlußende und dem vorkragenden Formkörper mindestens eine Entlastungsnut angeordnet ist, die eine auf das Teilungsmaß der Rastausnehmungen abgestimmte Federbewegung des Formkörpers in Längsrichtung des Flachstabes zuläßt. Gemäß einer anderen Ausführungsform der Erfindung sind die Klemmelemente als Brückenelemente ausgebildet, die einen Formkörper mit Sitzfläche für die einzuspannende Leitung sowie an beiden Enden ringförmige, auf die Flachstäbe aufschiebbare Anschlußenden aufweisen.

Um eine besonders einfache Handhabung zu gewährleisten, empfiehlt sich eine möglichst weitgehende Standardisierung der Flachstäbe sowie der Klemmelemente. Vorzugsweise sind die Klemmelemente beidseitig mit einer Sitzfläche ausgebildet. Bei beidseitiger Ausbildung mit einer Sitzfläche sind die Klemmelemente als unteres und oberes Klemmelement wahlweise einsetzbar. Ferner sind sie als Zwischenelemente einsetzbar, die eine erste Leitung oberseitig und eine zweite Leitung unterseitig halten. Zweckmäßig weisen die Sitzflächen ferner eine die Haftung der Leitungen verstärkende Profilierung auf.

Die Rastausnehmungen sind vorzugsweise als Vertiefungen des Flachstabs ausgebildet, die sich nicht bis zu den Außenkanten des Flachstabs erstrecken, sondern umfangsseitig geschlossen sind. Gemäß einer ersten Ausführung sind die Vertiefungen als Rechtecknuten ausgebildet, wobei die Rastnasen in Einschubrichtung eine Keilfläche sowie an ihrem in Einschubrichtung rückwärtigen Ende eine Rastschulter aufweisen. Eine andere Ausführung der Erfindung sieht vor, daß die Rastausnehmungen und die Rastnasen als sägezahnförmige Elemente gestaltet sind. Vorzugsweise bestehen die Rastnasen aus einem im Querschnitt V-förmig an dem ringförmigen Körper der Anschlußenden angeformten Spreizelement.

Die Aufrastung der Klemmelemente sollte mit einem möglichst kleinen Teilungsmaß möglich sein. Ein sehr kleines Teilungsmaß für die Rastung ist insbesondere dann erreicht, wenn gemäß einer bevorzugten Ausführung der Erfindung die Rastausnehmungen in zwei parallelen Reihen angeordnet sind, wobei die Reihen in Stablängsrichtung um ein halbes Teilungsmaß versetzt sind und wobei jeder Reihe eine elastisch verformbare, vorzugsweise als Spreizelement ausgebildete Rastnase, zugeordnet ist.

Um die Rastverbindung wieder lösen zu können, ist gemäß einer bevorzugten Ausführung der Erfindung an dem ringförmigen Körper der Anschlußenden eine Schulter zum Ansetzen eines Hebelwerkzeuges vorgesehen, welches an der zugeordneten Fläche des Flachstabs abgestützt werden kann. Mittels des Hebelwerkzeuges, z.B. eines Schraubendrehers, ist der Ringkörper des Anschlußendes so weit dehnbar, daß die Rastnase sich aus der Rastverbindung löst.

Im folgenden wird die Erfindung anhand einer lediglich ein Ausführungsbeispiel darstellenden Zeichnung erläutert. Es zeigen schematisch
- Fig. 1: einen Längsschnitt durch eine erfindungsgemäße Klemmvorrichtung,
- Fig. 2: einen Ausschnitt aus Fig. 1 in vergrößerter Darstellung,
- Fig. 3: eine Draufsicht auf den Gegenstand aus Fig. 1, und
- Fig. 4 bis 6: weitere Ausführungen des in Fig. 1 dargestellten Gegenstandes.

Die in den Figuren dargestellte Klemmvorrichtung dient der Zugentlastung von Leitungen, die ein- oder mehrlagig in einer (nicht dargestellten) Energieführungskette verlegt sind. Sie besteht aus einem Träger 1 und an dem Träger gehaltenen Klemmelementen 2 mit Sitzflächen 3, wobei die Leitungen 4 zwischen den Sitzflächen jeweils zwei benachbarter Klemmelemente zugfest einspannbar sind.

Der Träger 1 besteht aus mindestens einem vertikal angeordneten Flachstab 5 mit einem bodenseitigen Fuß 6 und in Längsrichtung gereihten Rastausnehmungen 7. Der Fuß 6 ist im Ausführungsbeispiel als Steckfuß ausgebildet und kann innerhalb der Energieführungskette an einem Quersteg oder außerhalb der Energieführungskette an einer geschlitzten oder genuteten Schwelle befestigt werden. Auch andere Gestaltungen des Fußes sind möglich. So kann der Fuß beispielsweise auch als Klemmfuß oder als Schraubfuß ausgebildet sein.

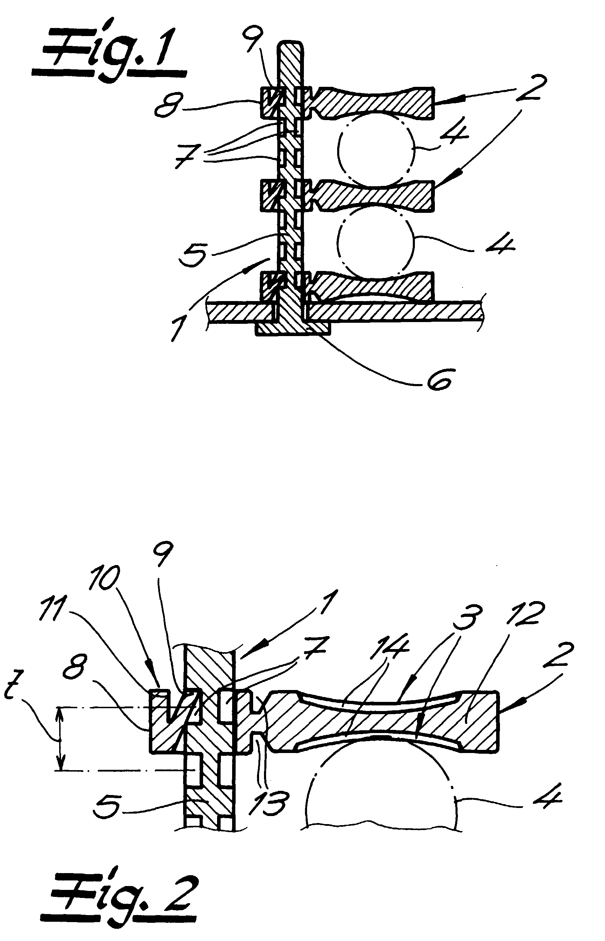

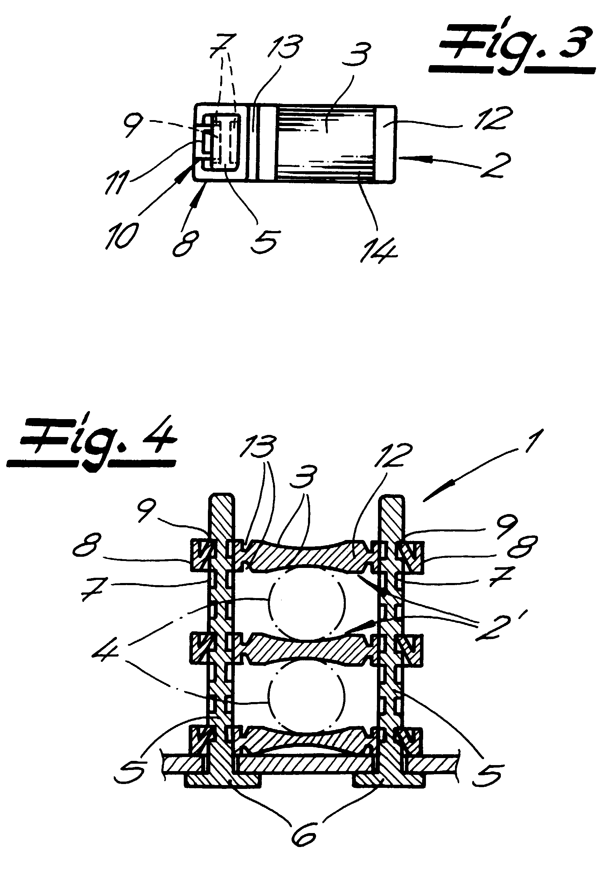

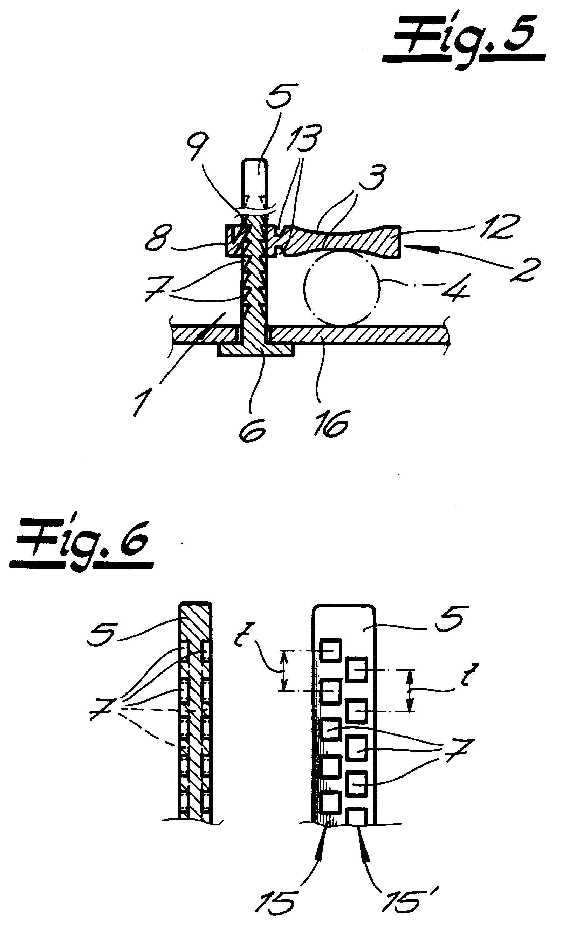

Einer vergleichenden Betrachtung insbesondere der Fig. 1 und 3 entnimmt man, daß die Klemmelemente 2 ringförmige Anschlußenden 8 aufweisen, die auf den Flachstab 5 aufschiebbar sind und eine in Aufschubrichtung federnd in die Rastausnehmungen 7 des Flachstabs 5 eingreifende sowie die Rückstellbewegung blockierende Rastnase 9 aufweisen. Vorzugsweise bilden die Anschlußenden ringfömig geschlossene Körper. Bei der in Fig. 1 dargestellten Ausführung sind die Rastausnehmungen 7 als Rechtecknuten ausgebildet und weisen die Rastnasen 9 in Einschubrichtung eine Keilfläche sowie an ihrem in Einschubrichtung rückwärtigen Ende eine Rastschulter auf. Die Rastausnehmungen 7 und die Rastnasen 9 können aber auch als sägezahnförmige Elemente ausgebildet sein (Fig. 5).

Insbesondere der Fig. 2 entnimmt man, daß die Rastnasen 9 aus einem im Querschnitt V-förmig an den ringförmigen Körper der Anschlußenden 8 angeformten Spreizelement 10 bestehen. Um die Rastverbindung zu lösen, ist an dem ringförmigen Körper eine Schulter 11 zum Ansetzen eines Hebelwerkzeuges, z.B. eines Schraubendrehers, vorgesehen. Mittels des Hebelwerkzeuges, das an der zugeordneten Fläche des Flachstabs abgestützt wird, ist der Ringkörper des Anschlußendes 8 so weit dehnbar, daß die Rastnase 9 sich aus der Rastverbindung löst.

Bei der in Fig. 1 dargestellten Ausführung der Erfindung sind die Klemmelemente 2 als Kragarme ausgebildet. Sie weisen einen Formkörper 12 mit Sitzflächen 3 für die einzuspannende Leitung 4 sowie lediglich ein einziges Anschlußende 8 auf. Diese Ausführungsform ist besonders für Leitungen mit kleinerem Durchmesser geeignet. Zwischen dem Anschlußende 8 und dem vorkragenden Formkörper 12 sind Entlastungsnuten 13 oberseitig und unterseitig angeordnet, die eine auf das Teilungsmaß t der Rastausnehmungen 7 abgestimmte Federbewegung des Formkörpers 12 in Längsrichtung des Flachstabs 5 zulassen. Die Sitzflächen 3 weisen eine die Haftung der Leitung verstärkte Profilierung 14 auf.

Gemäß der Ausführungsform in Fig. 4 besteht der Träger aus zwei mit Abstand angeordneten vertikalen Flachstäben 5. Die Klemmelemente 2' sind hier als Brückenelemente ausgebildet und weisen einen Formkörper 12 mit einer Sitzfläche 3 für die einzuspannende Leitung 4 sowie an beiden Enden ringförmig geschlossene, auf die Flachstäbe 5 aufschiebbare Anschlußenden 8 auf. Diese Ausführung bietet sich besonders für Leitungen mit großem Durchmesser an. An die Klemmelemente 2, 2' sind beidseitig Sitzflächen 3 angeformt.

Der Fig. 5 entnimmt man, daß die Leitungen 4 auch zwischen einer Bodenfläche 16, an der der Fuß 6 des Flachstabs 5 befestigt ist, und der Sitzfläche 3 eines Klemmelementes 2 eingespannt werden kann.

Bei der in Fig. 6 dargestellten Ausführung des Flachstabes 5 sind die Rastausnehmungen 7 in zwei parallelen Reihen 15, 15' angeordnet, wobei die Reihen 15, 15' in Stablängsrichtung um ein halbes Teilungsmaß t versetzt sind. Jeder Reihe 15, 15' ist eine elastisch verformbare, vorzugsweise als Spreizelement ausgebildete Rastnase 9 zugeordnet. Speziell bei dieser Ausführung ist eine Aufrastung in sehr kleinen Rastschritten möglich. Insbesondere der Fig. 6 entnimmt man auch, daß die Rastausnehmungen 7 umfangsseitig geschlossene Vertiefungen des Flachstabs 5 bilden, sich also nicht bis zu den Außenkanten des Flachstabs 5 erstrecken.

## Patentansprüche

1. Klemmvorrichtung für eine Zugentlastung dynamisch beanspruchter Leitungen, insbesondere für Leitungen in einer Energieführungskette, mit
einem Träger (1) und
mindestens einem an dem Träger (1) gehaltenen Klemmelement (2),
wobei die Leitungen (4) an einer Sitzfläche (3) des Klemmelementes (2) zugfest einspannbar sind, **dadurch gekennzeichnet**, daß der Träger (1) aus zumindest einem Flachstab (5) besteht, der in Längsrichtung gereihte Rastausnehmungen (7) aufweist, und daß das Klemmelement (2) ein ringförmiges Anschlußende (8) aufweist, das auf den Flachstab (5) aufschiebbar ist und eine in Aufschubrichtung federnd in die Rastausnehmungen (7) des Flachstabs (5) eingreifende sowie die Rückstellbewegung blockierende Rastnase (9) aufweist.

2. Klemmvorrichtung nach Anspruch 1, dadurch gekennzeichnet, daß die Klemmelemente (2) als Kragarme ausgebildet sind, die einen Formkörper (12) mit Sitzfläche (3) für die einzuspannende Leitung (4) sowie lediglich ein einziges Anschlußende (8) aufweisen, wobei zwischen dem Anschlußende (8) und dem vorkragenden Formkörper (12) mindestens eine Entlastungsnut (13) angeordnet ist, die eine auf das Teilungsmaß (t) der Rastausnehmungen (7) abgestimmte Federbewegung des Formkörpers (12) in Längsrichtung des Flachstabs (5) zuläßt.

3. Klemmvorrichtung nach Anspruch 1, dadurch gekennzeichnet, daß die Klemmelemente (2) als Brückenelemente ausgebildet sind, die einen Formkörper (12) mit Sitzfläche (3) für die einzuspannende Leitung (4) sowie an beiden Enden ringförmige, auf die Flachstäbe (5) aufschiebbare Anschlußenden (8) aufweisen.

4. Klemmvorrichtung nach einem der Ansprüche 1 bis 3, dadurch gekennzeichnet, daß die Klemmelemente (2) beidseitig mit einer Sitzfläche (3) ausgebildet sind.

5. Klemmvorrichtung nach einem der Ansprüche 1 bis 4, dadurch gekennzeichnet, daß die Sitzflächen (3) eine die Haftung der Leitungen (4) verstärkende Profilierung (14) aufweisen.

6. Klemmvorrichtung nach einem der Ansprüche 1 bis 5, dadurch gekennzeichnet, daß die Rastausnehmungen (7) als Rechtecknuten ausgebildet sind und die Rastnasen (9) in Einschubrichtung eine Keilfläche sowie an ihrem in Einschubrichtung rückwärtigen Ende eine Rastschulter aufweisen.

7. Klemmvorrichtung nach einem der Ansprüche 1 bis 5, dadurch gekennzeichnet, daß die Rastausnehmungen (7) und die Rastnasen (9) als sägezahnförmige Elemente ausgebildet sind.

8. Klemmvorrichtung nach einem der Ansprüche 1 bis 7, dadurch gekennzeichnet, daß die Rastnasen (9) aus einem im Querschnitt V-förmig an dem ringförmigen Körper der Anschlußenden (8) angeformten Spreizelement (10) bestehen.

9. Klemmvorrichtung nach einem der Ansprüche 1 bis 8, dadurch gekennzeichnet, daß die Rastausnehmungen (7) in zwei parallelen Reihen (15, 15') angeordnet sind, wobei die Reihen (15, 15') in Stablängsrichtung um ein halbes Teilungsmaß (t) versetzt sind und daß jeder Reihe (15, 15') eine elastisch verformbare, vorzugsweise als Spreizelement (10) ausgebildete Rastnase(9) , zugeordnet ist.

10. Klemmvorrichtung nach einem der Ansprüche 1 bis 9, dadurch gekennzeichnet, daß an dem ringförmigen Körper der Anschlußenden (8) eine Schulter (11) zum Ansetzen eines an der zugeordneten Fläche des Flachstabes (5) abstützbaren Hebelwerkzeuges vorgesehen ist, wobei der Ringkörper des Anschlußendes (8) mittels des Hebelwerkzeuges so weit dehnbar ist, daß die Rastnase (9) sich aus der Rastverbindung löst.

11. Klemmvorrichtung nach einem der Ansprüche 1 bis 10, dadurch gekennzeichnet, daß der Flachstab (5) einen Steckfuß (6) aufweist, der an Querstegen einer Energieführungskette lösbar befestigt werden kann.

12. Klemmvorrichtung nach einem der Ansprüche 1 bis 11, dadurch gekennzeichnet, daß die Rastausnehmungen (7) umfangsseitig geschlossene Vertiefungen des Flachstabes (5) bilden.
